(19) **Europäisches Patentamt / European Patent Office / Office européen des brevets**

(11) **EP 1 523 643 B1**

(12) **FASCICULE DE BREVET EUROPEEN**

(45) Date de publication et mention
de la délivrance du brevet:
**12.09.2007 Bulletin 2007/37**

(21) Numéro de dépôt: **03771135.5**

(22) Date de dépôt: **11.07.2003**

(51) Int Cl.:
***F25B 17/04*** *(2006.01)*

(86) Numéro de dépôt international:
**PCT/FR2003/002218**

(87) Numéro de publication internationale:
**WO 2004/011860 (05.02.2004 Gazette 2004/06)**

(54) **PROCEDE POUR LA PRODUCTION DE FROID, ET INSTALLATION POUR LA MISE EN OEUVRE DU PROCEDE.**

VERFAHREN ZUR KÄLTEERZEUGUNG UND ANLAGE ZUR DURCHFÜHRUNG DES VERFAHRENS

METHOD FOR PRODUCING COLD AND INSTALLATION THEREFOR

(84) Etats contractants désignés:
**AT BE BG CH CY CZ DE DK EE ES FI FR GB GR HU IE IT LI LU MC NL PT RO SE SI SK TR**

(30) Priorité: **24.07.2002 FR 0209392**

(43) Date de publication de la demande:
**20.04.2005 Bulletin 2005/16**

(73) Titulaire: **CENTRE NATIONAL DE LA RECHERCHE SCIENTIFIQUE**
**75016 Paris Cédex (FR)**

(72) Inventeurs:
• **STITOU, Driss**
  **F-66570 ST NAZAIRE (FR)**

• **SPINNER, Bernard**
  **F-66100 PERPIGNAN (FR)**
• **NEVEU, Pierre**
  **F-66130 Saint Michel de Llotes (FR)**

(74) Mandataire: **Sueur, Yvette**
**Cabinet SUEUR et L'HELGOUALCH,**
**109, boulevard Haussmann**
**75008 Paris (FR)**

(56) Documents cités:
**EP-A- 0 810 410**    **WO-A-97/40328**
**FR-A- 2 615 601**    **US-A- 5 186 241**

**Description**

L'invention concerne une installation et un procédé pour la production de froid par un système thermochimique, notamment pour la congélation de divers produits ou pour la production d'eau glacée.

On connaît des installations de production de chaleur ou de froid basées sur des changements de phase liquide/gaz ou des sorptions renversables entre un gaz, dit gaz de travail, et un sorbant liquide ou solide. Une sorption renversable peut être une absorption d'un gaz par un liquide, une adsorption d'un gaz sur un solide, ou une réaction entre un gaz et un solide. Une sorption renversable entre un sorbant S et un gaz G est exothermique dans le sens de la synthèse S + G → SG, et endothermique dans le sens de la décomposition SG → S + G. Dans un changement de phase liquide/gaz de G, la condensation est exothermique et l'évaporation est endothermique.

Ces phénomènes renversables peuvent être représentés sur le diagramme de Clausius-Clapeyron par leur droite d'équilibre

$$\ln P = f(-1/T), \text{ plus précisément } \ln P = -\frac{\Delta H}{RT} + \frac{\Delta S}{R}$$

P et T étant respectivement la pression et la température, $\Delta H$ et $\Delta S$ étant respectivement l'enthalpie et l'entropie du phénomène (décomposition, synthèse, évaporation, condensation) mis en jeu, et R étant la constante des gaz parfaits.

L'étape endothermique peut être mise à profit dans une installation de ce type pour congeler divers produits (notamment de l'eau pour l'obtention de glaçons) ou pour la production d'eau froide.

Divers réacteurs et procédés reposant sur ces principes ont été décrits.

EP0810410 décrit un dispositif comprenant un réacteur et un évaporateur/condenseur reliés par une conduite munie d'une vanne. Le réacteur est le siège d'une réaction thermochimique ou d'une adsorption solide-gaz. Il comprend des moyens pour chauffer le solide qu'il contient et des moyens pour éliminer la chaleur de la réaction de synthèse exothermique, ces moyens étant constitués soit par un échangeur de chaleur, soit par l'augmentation de la masse thermique du réacteur. Le réacteur est aménagé de telle sorte qu'avec son contenu, il ait une masse thermique suffisante pour absorber la chaleur produite lors de la réaction exothermique. Le procédé de gestion de ce dispositif consiste à mettre en communication l'évaporateur/condenseur avec le réacteur lorsque l'évaporateur/condenseur est rempli du gaz de travail sous forme liquide, ce qui a pour effet de refroidir l'évaporateur/ condenseur par évaporation, puis mettre en marche les moyens destinés à chauffer le solide afin de refouler et condenser le gaz de travail vers l'évaporateur/ condenseur. La mise en marche des moyens destinés à réchauffer le solide dans le réacteur débute avant que l'étape précédente ne soit terminée. Le froid produit à l'évaporateur/condenseur peut être utilisé pour produire de l'eau froide ou des glaçons. Toutefois, dans ce dispositif, les temps de cycles sont relativement longs du fait que la régénération du dispositif se fait à haute température Th et que le refroidissement du réacteur se fait à la température ambiante To. Par conséquent, le réacteur parcourt une amplitude thermique entre la température de régénération et la température ambiante relativement importante ce qui induit un faible coefficient de performance.

EP-0835414 décrit un procédé pour la production de froid et/ou de chaleur par des phénomènes thermochimiques mettant en oeuvre un gaz G, dans une installation comprenant deux réacteurs ($R_1$, $R_2$) contenant respectivement un sel ($S_1$, $S_2$), un évaporateur pour le gaz G et un condenseur pour le gaz G. La température d'équilibre du sel $S_1$ est inférieure à la température d'équilibre du sel $S_2$ à une pression donnée. Les réacteurs sont placés en contact thermique de manière à pouvoir échanger de la chaleur. Les réacteurs, l'évaporateur et le condenseur sont mis en relation de manière sélective à l'aide de conduites munies de vannes. A l'état initial, les réacteurs et le condenseur sont en communication, à la pression du condenseur. Lors du fonctionnement, l'un des réacteurs est en mode de synthèse pendant que l'autre réacteur est en mode de décomposition. Dans ce mode de fonctionnement, le froid est produit à un seul niveau de température, c'est-à-dire à la température d'évaporation dans l' évaporateur. WO 97/40328 décrit un dispositif pour la production de froid comprenant deux réacteurs, conçus de manière à échanger de la chaleur par convection.

Le but de la présente invention est de fournir un procédé et une installation permettant une production frigorifique volumique très élevée, par exemple de l'ordre de 200 kW/m$^3$, avec des durées de cycles fortement réduites et des performances plus intéressantes, notamment pour la production instantanée et rapide d'eau froide, ou pour la congélation rapide de divers produits (par exemple pour la production de glaçons).

Le procédé selon la présente invention pour la production de froid par un système thermochimique comprend trois phénomènes renversables mettant en oeuvre le gaz G, dans trois enceintes (EC), (1) et (2), les températures d'équilibre respectives $T_{E(EC)}$, $T_{E(1)}$ et $T_{E(2)}$ à une pression donnée étant telles que $T_{E(EC)} < T_{E(2)} < T_{E(1)}$, les enceintes (1) et (2) étant en contact thermique. Il est caractérisé en ce que, à partir d'un état dans lequel les trois enceintes sont à température ambiante à la même pression,

- dans une première phase, on isole l'enceinte (1), on met en communication les enceintes (EC) et (2) pour provoquer la synthèse exothermique dans (2), la chaleur formée étant absorbée par l'enceinte (1) ;

- dans une deuxième phase, on isole l'enceinte (2) et on met en communication les enceintes (EC) et (1) pour provoquer la synthèse exothermique dans (1), la chaleur formée étant absorbée par l'enceinte (2) ;
- dans une troisième phase, on met en communication les trois enceintes et on apporte de l'énergie calorifique à l'enceinte (1) pour provoquer les étapes de décomposition exothermique dans (1) et dans (2), en vue de régénérer l'installation, qu'on laisse ensuite revenir à la température ambiante.

De manière plus précise :

- au cours d'une phase préliminaire, on isole les trois enceintes les unes des autres et on les place à la température ambiante, lesdites enceintes contenant respectivement SEC+G, S1 et S2 ;
- au cours d'une première phase, on met en communication les enceintes (EC) et (2), l'enceinte (1) restant isolée, pour provoquer la synthèse exothermique dans (2) et la production de froid dans l'enceinte (EC) à la température d'équilibre dans (EC) correspondant à la pression dans l'ensemble formé par (2) et (EC) ;
- au cours d'une deuxième phase, on isole l'enceinte (2) et on met en communication les enceintes (EC) et (1), pour provoquer la synthèse exothermique dans (1) et la production de froid dans l'enceinte (EC) à la température d'équilibre dans (EC) correspondant à la pression dans l'ensemble formé par (1) et (EC) ;
- au cours d'une troisième phase, on met en relation les trois enceintes pour provoquer la synthèse dans (EC) et la décomposition dans (2), et on apporte de l'énergie calorifique à (1) pour provoquer la décomposition dans (1) ;
- au cours d'une quatrième phase, on isole les trois enceintes et on les laisse refroidir jusqu'à la température ambiante.

Le cycle de production de froid est ainsi complet.
Le phénomène renversable dans les réacteurs (1) et (2) peut être une sorption renversable choisie parmi les réactions chimiques renversables entre le gaz G et un solide, les adsorptions du gaz G sur un solide, et les absorptions du gaz G par un liquide.
Le phénomène renversable dans le dispositif (EC) peut être une sorption telle que définie ci-dessus ou un changement de phase liquide/gaz du gaz G. Les changements de phase liquide/gaz sont préférés, car ils permettent de produire du froid avec une plus grande vitesse qu'avec des sorptions, du fait de la plus faible inertie thermique du système.
Dans la suite du texte, "sorption" désignera une sorption renversable, "phénomène" désignera un phénomène renversable choisi parmi les sorptions et les changements de phase liquide/gaz, "changement L/G" désignera le changement de phase liquide/gaz du gaz G, "S1", "S2" et "SEC" désigneront le sorbant à l'état pauvre en gaz ou le cas échéant G à l'état gazeux respectivement dans le réacteur (1), le réacteur (2) et le dispositif (EC), "S1+G", "S2+G" et "SEC+G" désigneront le sorbant à l'état riche en gaz ou le cas échéant G à l'état liquide respectivement dans le réacteur (1), le réacteur (2) et le dispositif (EC).
Comme exemple de gaz G, on peut citer l'ammoniac ($NH_3$) et ses dérivés, l'hydrogène ($H_2$), le dioxyde de carbone ($CO_2$), l'eau ($H_2O$), le sulfure d'hydrogène ($H_2S$), le méthane et d'autres gaz naturels. Comme réaction de sorption, on peut citer les réactions utilisant des ammoniacates (par exemple des chlorures, des bromures, des iodures ou des sulfates), des hydrates, des carbonates ou des hydrures.
Le procédé selon la présente invention peut être mis en oeuvre à l'aide d'une installation qui comprend un élément endothermique constitué par un dispositif (EC) et un élément exothermique constitué par un réacteur (1) et un réacteur (2). Ladite installation est caractérisée en ce que:

- les réacteurs (1) et (2) sont en contact thermique, de sorte que chacun d'eux constitue une masse thermique active pour l'autre ;
- les réacteurs (1) et (2) et le dispositif (EC) sont munis de moyens permettant de les mettre sélectivement en communication ;
- le réacteur (1) et le réacteur (2) sont munis de moyens de chauffage (6) et de moyens (5) pour évacuer la chaleur ;
- au début du cycle

  * les réacteurs (1) et (2) contiennent respectivement un sorbant S1 et un sorbant S2 susceptibles de participer à une sorption renversable mettant en jeu un gaz G, la courbe d'équilibre de la sorption renversable dans (1) étant située dans un domaine de température plus élevé que celui de la courbe d'équilibre de la sorption renversable dans (2) dans le diagramme de Clapeyron ;
  * le dispositif (EC) contient un composé G susceptible de subir un changement de phase liquide/gaz ou un sorbant SEC+G riche en gaz G susceptible de participer à une sorption renversable dont la température d'équilibre est inférieure à la température d'équilibre de la sorption renversable dans le réacteur (2).

Dans un mode de réalisation particulier, le contact thermique entre les réacteurs (1) et (2) est réalisé en plaçant le réacteur (1) à l'intérieur du réacteur (2). Par exemple, les réacteurs (1) et (2) peuvent être concentriques, le réacteur (1) étant placé à l'intérieur du réacteur (2).

Dans un autre mode de réalisation, chacun des réacteurs (1) et (2) est constitué par plusieurs plaques creuses contenant les sorbants respectifs, les plaques de l'un étant alternées avec les plaques de l'autre. L'épaisseur des plaques est typiquement de l'ordre de 1 à 3 cm.

Dans une installation selon l'invention, la production de froid a lieu au niveau du dispositif (EC). Si le froid est destiné à la production de glaçons ou d'eau froide, l'installation comprend en outre un réservoir (3) contenant de l'eau en contact thermique direct avec le dispositif (EC). Si l'on veut produire des glaçons, on utilise de préférence un réservoir (3) compartimenté à la taille des glaçons souhaités. Lorsque l'installation est utilisée pour fabriquer de l'eau froide, le réservoir 3 peut être un serpentin dans lequel circule de l'eau, intégré à la paroi du dispositif (EC). Si l'installation est destinée à congeler divers produits, le réservoir (3) a la forme adéquate pour contenir et congeler correctement les produits

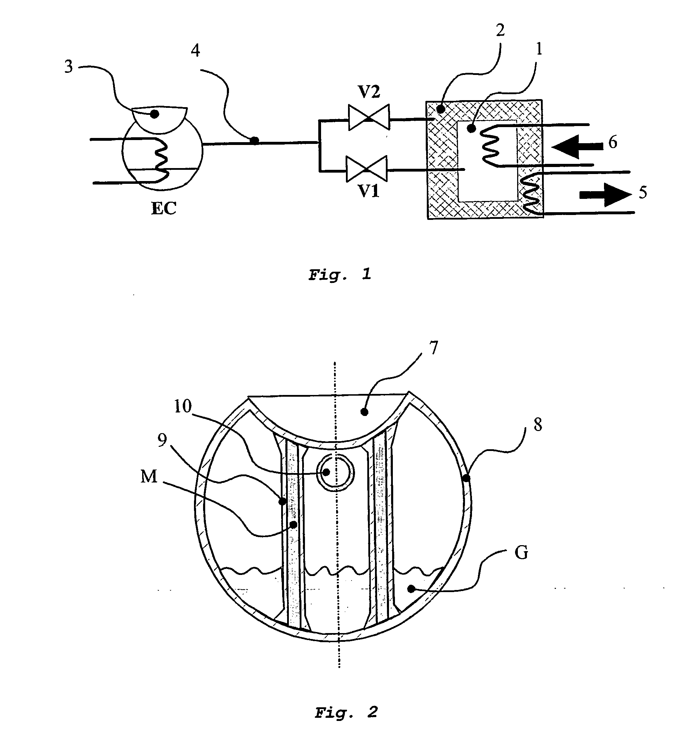

La figure 1 représente un schéma d'une installation selon l'invention.

Sur cette figure, l'installation comprend un réacteur (1) muni de moyens de chauffage (6), un réacteur (2) en contact thermique avec le réacteur (1) et muni de moyens de refroidissement (5), un dispositif (EC), des conduites munies de vannes V1 et V2 permettant de mettre les réacteurs (1) et (2) sélectivement en contact avec (EC). Le réacteur (1) contient un sorbant S1 capable de former une sorption avec un gaz G. Le réacteur (2) contient un sorbant S2 capable de former une sorption avec le gaz G, la température d'équilibre de S1 étant supérieure à la température d'équilibre de S2 à une pression donnée. Le dispositif (EC) contient le gaz G à l'état liquide ou un sorbant SEC capable de former une sorption avec le gaz G, la température d'équilibre de SEC étant inférieure à la température d'équilibre de S2 à une pression donnée. Le dispositif (EC) est avantageusement un évaporateur/ condenseur (désigné ci-après par évaporateur) siège d'un changement de phase liquide/gaz (L/G). (EC) est en contact thermique direct avec un réservoir (3) intégré dans sa paroi et contenant de l'eau.

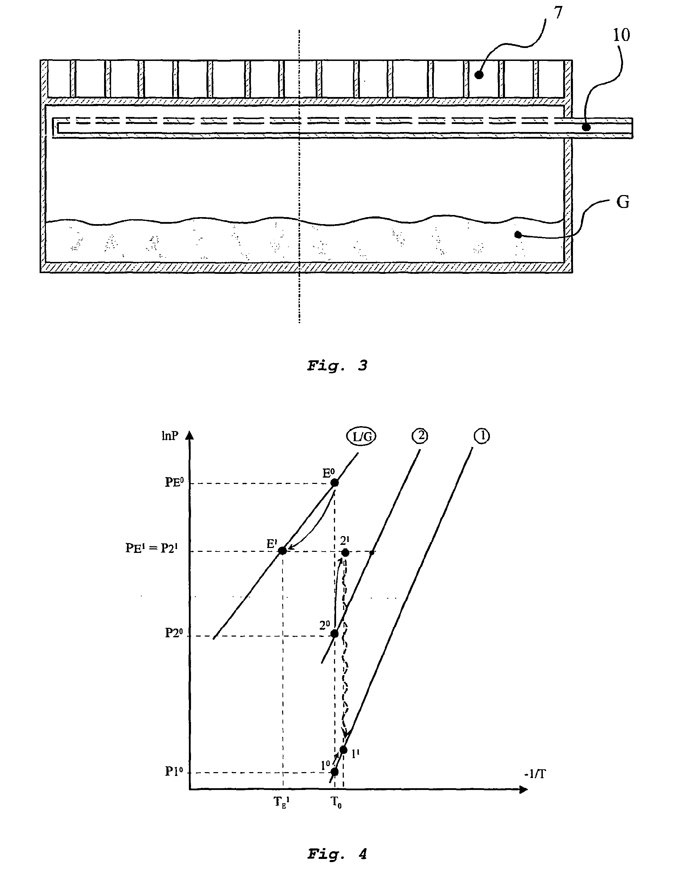

L'installation et le procédé selon l'invention sont particulièrement intéressants lorsque le dispositif (2) est un évaporateur/condenseur (désigné ci-après par évaporateur). Dans un mode de réalisation particulier, l'évaporateur a une structure telle que représentée sur les figures 2 et 3. La figure 2 représente une vue en section transversale, la figure 3 représente une vue en coupe longitudinale.

L'évaporateur est constitué par un cylindre (8) qui est fermé à ses deux extrémités et qui a une section circulaire. La section circulaire comporte à sa partie supérieure un arc de cercle concave correspondant à la section du bac à glaçon (7). Des ailettes creuses (9) sont placées à l'intérieur de l'évaporateur, dans le sens longitudinal. Un tube (10) relié à la conduite permettant le transfert du gaz G entre l'évaporateur et les réacteurs (1) ou (2) pénètre dans l'enceinte cylindrique de l'évaporateur par un alésage réalisé dans l'une des extrémités du cylindre, et il est placé directement sous la paroi du bac à glaçons (7). Le gaz de travail G sous forme d'un liquide en ébullition est placé dans le fond de l'évaporateur. L'espace entre les parois des ailettes est occupé par le matériau à changement de phase M.

La paroi extérieure de l'évaporateur (8) est réalisée dans un matériau ayant une diffusivité thermique élevée, c'est-à-dire une faible capacité thermique pour permettre une descente rapide de la température de paroi et une forte conductivité thermique pour permettre une formation rapide des glaçons. Un matériau à base d'aluminium par exemple, qui a une capacité thermique faible et une conductivité élevée, est approprié en raison de sa compatibilité avec l'ammoniac, qui est un gaz fréquemment utilisé dans les installations pour la production de froid à des température négatives . Les ailettes (9) augmentent la diffusion de la chaleur du liquide en ébullition vers le bac à glaçons, ainsi que la résistance mécanique de l'évaporateur. Le bac à glaçons 7 est muni de multiples cloisons transversales, placées de sorte à obtenir la forme souhaitée pour les glaçons. La forme globale du bac à glaçons possède une géométrie adaptée en demi-lune torique, ce qui permet un démoulage aisé des glaçons formés.

Le matériau à changement de phase M placé entre les parois des ailettes creuses maintient la température de l'évaporateur à une température basse, ce qui permet de prolonger la phase de production des glaçons pendant la phase transitoire de chauffage pour la régénération du réacteur isolé de l'évaporateur.

La configuration particulière du tube (10) et sa position dans l'enceinte de l'évaporateur sont telles que les gaz chauds, provenant du réacteur lors de la phase 5 de mise en communication du réacteur à haute pression et de l'évaporateur maintenu à basse pression par le matériau à changement de phase, viennent frapper en premier lieu la paroi du bac à glaçons, ce qui facilite de décollement des glaçons.

Dans un mode de réalisation particulier, le procédé selon l'invention pour la production de froid est mis en oeuvre à l'aide d'une installation telle que décrite ci-dessus, dans laquelle l'enceinte (EC) contient en outre un matériau à changement de phase solide/liquide M. Le matériau à changement de phase M est choisi de telle sorte que le température de solidification soit au moins légèrement inférieure à la température de production de froid dans (EC) correspondant à la synthèse dans (2). Un écart de température de quelques degrés, par exemple de 1°C à 10°C est convenable. Par exemple, cette température est de 0°C lorsque le but recherché est la fabrication de glaçons. Le matériau M peut être choisi par exemple parmi les paraffines telles que les n-alcanes ayant de 10 à 20 atomes de carbone, les mélanges eutectiques et les solutions eutectiques. Le processus se déroule de la même manière que dans le cas général décrit ci-dessus. Toutefois, lors de l'étape de régénération, la température dans l'enceinte (EC) est celle de la fusion du matériau M, induisant une température de régénération inférieure à ce qu'elle serait en l'absence du matériau à changement de phase. Cette variante de mise en oeuvre du procédé de l'invention permet par conséquent de réduire la durée d'un cycle et la quantité d'énergie requise pour la régénération.

La mise en oeuvre du procédé de l'invention dans une installation selon l'invention est décrite plus en détail ci-après par référence aux figures 4 à 7, pour une installation dans laquelle (EC) est un évaporateur/ condenseur. Les figures 4 à 7 représentent la position de l'installation dans le diagramme de Clausius-Clapeyron, aux différentes phases d'un cycle de fonctionnement. Les courbes sur les diagrammes correspondent à des phénomènes monovariants. Le fonctionnement de l'installation serait toutefois identique si l'on utilisait dans les réacteurs (1) et/ou (2) un phénomène divariant, correspondant par exemple à l'absorption du gaz G par une solution absorbante (par exemple eau/$NH_3$, eau/ LiBr) ou à l'adsorption du gaz G sur la surface d'un solide actif (par exemple charbon actif ou zéolithe).

Phase initiale :

Au cours d'une phase initiale, on place les éléments (1), (2) et (EC) à la température ambiante $T_0$ et on les isole les uns des autres en maintenant les vannes V1 et V2 fermées. Les éléments étant isolés les uns des autres, ils se trouvent à leur pression d'équilibre respective à $T_0$, désignées par $PE^0$, $P1^0$ et $P2^0$. (1) et (2) contiennent respectivement S1 et S2. (EC) contient G sous forme liquide. S1, S2 et G sont choisis de telle sorte que P1°< P2°< PE°. La situation des éléments est représentée par $1^0$, $2^0$ et $E^0$ sur le diagramme de la figure 4.

Phase 1 : Phase de première production de froid

La vanne $V_1$ reste fermée. L'installation fonctionne par le réacteur (2) et l'évaporateur (EC). L'ouverture de la vanne $V_2$ provoque une égalisation de pression ($PE^1 = P2^1$) entre (EC) et (2). L'évaporateur (EC) passe de la position $E^0$ vers $E^1$ et le réacteur (2) de la position $2^0$ vers $2^1$. L'évolution des positions respectives est représentée sur la figure 4. Dans l'état $2^1$, le réacteur (2) est en position de synthèse, tandis que dans l'état $E^1$, l'évaporateur (EC) est en état d'évaporation. La mise en communication de (EC) et de (2) provoque une baisse brutale de température dans (EC) et la température passe de $T_0$ à $T_{E1}$. Cette baisse de température permet ainsi dans un premier temps la congélation rapide de l'eau contenu dans un bac (non représenté sur la figure 1) intégré à la paroi de l'évaporateur. Un premier pic de puissance est alors observé. Le gaz libéré par l'évaporation dans (EC) est absorbé par le sorbant S2 contenu dans (2), ce qui provoque une montée en température du réacteur (2) du fait que la sorption est fortement exothermique. L'énergie produite par la sorption dans (2) est absorbée par le réacteur (1) qui est isolé de (EC) mais en contact thermique avec (2). Le réacteur (1) constitue alors une capacité thermique permettant au réacteur (2) de se maintenir loin de son équilibre thermodynamique. Le réacteur (1) passe alors de la position $1^0$ vers la position $1^1$ en restant sur sa droite d'équilibre thermodynamique.

Phase 2 : Phase de seconde production de froid

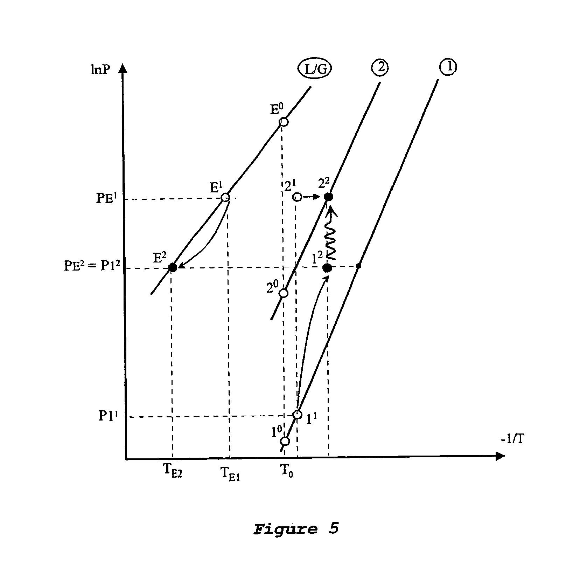

Lorsque la synthèse est totale dans le réacteur (2) à la fin de la phase 1 [dont la durée est déterminée par la nature et les quantités d'éléments mis en oeuvre dans (2) et (EC)], on ferme la vanne $V_2$ et on ouvre immédiatement la vanne $V_1$. L'installation fonctionne alors par le réacteur (1) et l'évaporateur (EC). L'équilibre de pression qui s'établit entre le réacteur (1) et l'évaporateur (EC) fait passer ces éléments des positions représentées par $E^1$ et $1^1$ aux positions représentées par $E^2$ et $1^2$. Cette évolution est représenté sur la figure 5.

Du froid est produit dans l'évaporateur (EC) en $E^2$, c'est-à-dire à une température $T_{E2}$ inférieure à la température de production de froid $T_{E1}$ dans la phase 1. Du fait que les phases 1 et 2 s'effectuent à la suite l'une de l'autre, elles donnent des puissances fortes de production de froid à $T_{E2}$, n'entraînant (EC) que du niveau $T_E^1$ vers $T_E^2$. Lors de cette phase, le réacteur (2) joue le rôle de capacité thermique pour le réacteur (1). Le réacteur (2) qui absorbe la chaleur de réaction exothermique issu du réacteur (1), monte en température et se place sur son équilibre thermodynamique en $2^2$. Grâce cette capacité thermique, le réacteur (1) reste en $1^2$ qui est une position éloignée de son équilibre thermodynamique, ce qui permet un second pic de forte production de puissance frigorifique.

Phase 3: phase de décollement des glaçons et de régénération

A la fin ou avant la fin de la phase 2, on ouvre la vanne $V_2$, la vanne $V_1$ restant ouverte.

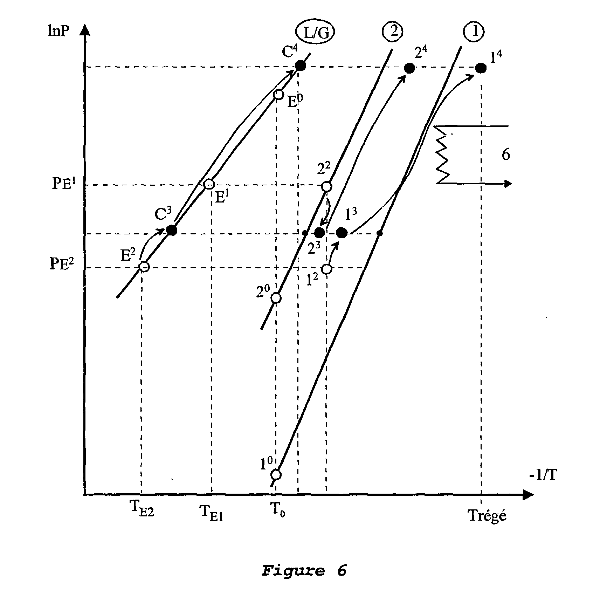

Les éléments (1), (2) et (EC) se placent rapidement dans les positions $1^3$, $2^3$ et $C^3$ à un niveau de pression intermédiaire entre celui des phases 1 et 2. Le contenu du réacteur (2) est en position de décomposition et le contenu du réacteur (1) reste en position de synthèse. Les écarts à l'équilibre de ces synthèse/décomposition restent importants, à cause du contact thermique qui existe entre les réacteurs (1) et (2). Il en résulte que la décomposition dans le réacteur (2) est plus rapide que la synthèse qui se termine dans le réacteur (1). Ainsi, une condensation est enclenchée immédiatement dans le dispositif (EC) qui évolue rapidement vers la position $C^3$. Cette condensation exothermique est possible car la chaleur est absorbée par la fusion superficielle des glaçons, ce qui induit leur décollement facilitant ainsi leur évacuation ultérieure du dispositif (EC). La mise en route des moyens de chauffage (6) dans (1) dès le début de cette phase (en même temps que l'ouverture de la vanne V2), entraîne la condensation dans (EC) qui évolue progressivement de la position $C^3$ à un niveau de pression $C^4$ qui permette de nouveau la condensation du gaz G. La condensation est à nouveau possible, lorsque le réacteur (1) se trouve en position $1^4$ et lorsque la pression de condensation devient supérieure à la pression de vapeur saturante correspondante à la température moyenne du fluide de refroidissement de l'élément (EC) (par exemple celle de l'air extérieur). La température $T_1{}^4$ est la température de régénération (Treg) et le dispositif (EC) est en position $C^4$, ce qui entraîne le réacteur (2) dans la position $2^4$ également au niveau de pression imposé par la condensation. La position thermodynamique $C^4$ est alors nécessairement telle que la température correspondante à la position $C^4$ est supérieure à la température ambiante To, ceci en raison du transfert de chaleur de condensation vers le puits de chaleur. La régénération du dispositif implique que l'extraction de la chaleur de cette condensation exothermique doit s'effectuer dans un puits de chaleur, pouvant être l'air ambiant ou un circuit de refroidissement. L'évolution de la position des différents éléments est représentée sur la figure 6.

### Phase 4 : Phase de refroidissement et de retour à la phase initiale

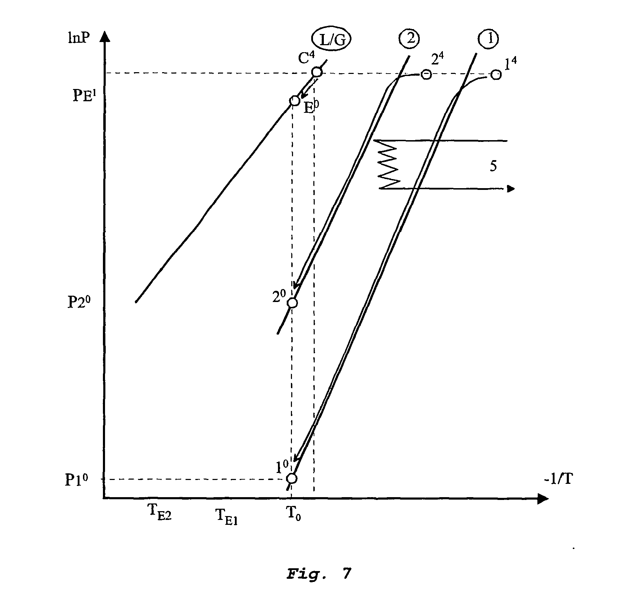

Dès que la régénération des réacteurs (1) et (2) est terminée, on ferme les vannes V1 et V2. Les réacteurs ainsi isolés sont alors refroidis, soit naturellement, soit à l'aide des moyens de refroidissement (5) (ventilateur, circuit de refroidissement,...) provoquant une baisse de température et de pression. Chaque élément évolue selon sa courbe d'équilibre thermodynamique jusqu'à atteindre la température ambiante et retrouver ainsi le positionnement initial respectivement en $E^0$, $1^0$ et $2^0$. Le dispositif se met ainsi dans les conditions initiales de la phase de stockage de la production de froid du début du cycle de fonctionnement. L'évolution de la position des différents éléments au cours de cette phase est représentée sur la figure 7.

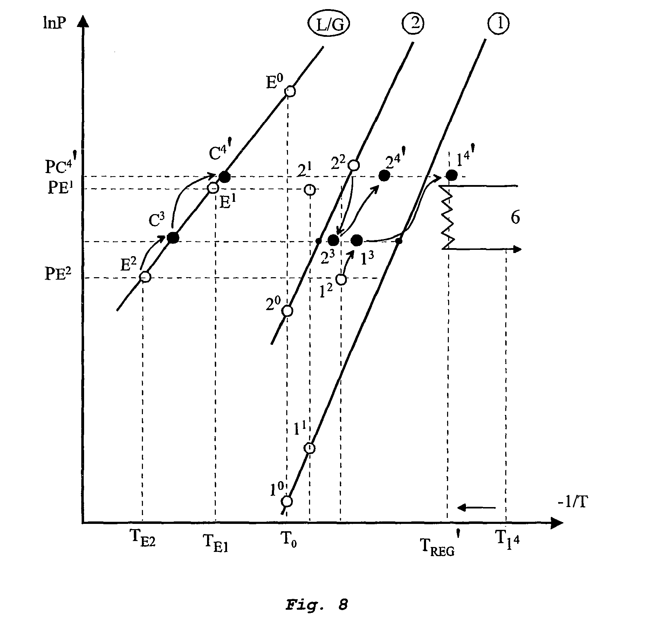

Lorsque le procédé de l'invention est mis en oeuvre avec une installation dans laquelle l'enceinte (EC) contient en outre un matériau à changement de phase M dont la température de changement de phase $T_M$ est au moins légèrement inférieure à la température de production de froid $T_{E1}$ dans (EC) correspondant à la synthèse dans (2), la régénération des sorbants contenus dans les réacteurs (1) et (2) est plus rapide. Les états successifs dans lesquels se trouvent les réacteurs (1) et (2) et l'enceinte (EC) au cours des phases successives sont montrés sur le diagramme de Clausius-Clapeyron représenté sur la figure 8. Dans ce mode de réalisation, le dispositif (EC) peut avoir la configuration représentée sur les figures 2 et 3.

### Phase initiale :

Elle est analogue à la phase initiale décrite ci-dessus. Les éléments (1), (2) et (EC) sont dans la position représentée par $1^0$, $2^0$ et $E^0$ sur la figure 8.

### Phase 1 : Phase de première production de froid

La vanne $V_1$ reste fermée. L'installation fonctionne par le réacteur (2) et l'évaporateur (EC). L'ouverture de la vanne $V_2$ provoque une égalisation de pression ($PE^1 = P2^1$) entre (EC) et (2). L'évaporateur (EC) passe de la position $E^0$ vers $E^1$ et le réacteur (2) de la position $2^0$ vers $2^1$. Dans l'état $2^1$, le réacteur (2) est en position de synthèse, tandis que dans l'état $E^1$, l'évaporateur (EC) est en état d'évaporation.

La mise en communication de (EC) et de (2) provoque une baisse brutale de la température dans (EC) qui passe de $T_0$ à $T_{E1}$. Cette baisse de température permet ainsi dans un premier temps le refroidissement rapide puis la congélation partielle de l'eau contenu dans le bac 7 intégré à la paroi de l'évaporateur, puis la solidification du matériau M. Le gaz libéré par l'évaporation dans (EC) est absorbé par le sorbant S2 contenu dans (2), ce qui provoque une montée en température du réacteur (2) du fait que la sorption est fortement exothermique. L'énergie produite par la sorption dans (2) est absorbée par le réacteur (1) qui est isolé de (EC) mais en contact thermique avec (2). Le réacteur (1) constitue alors une capacité thermique permettant au réacteur (2) de se maintenir loin de son équilibre thermodynamique. Le réacteur 1 passe alors de la position $1^0$ vers la position $1^1$ en restant sur sa droite d'équilibre thermodynamique.

### Phase 2 : Phase de seconde production de froid

La présence d'un matériau à changement de phase dans (EC) ne modifie pas le déroulement de la phase 2. A la fin de cette phase, les réacteurs (1) et (2) et l'enceinte (EC) se trouvent dans les positions respectives $1^2$, $2^2$, $E^2$.

Phase 3 : phase de décollement des glaçons et de régénération

A la fin dé la phase 2, on ouvre la vanne $V_2$, la vanne $V_1$ restant ouverte.

Les éléments (1), (2) et (EC) se placent rapidement dans les positions $1^3$, $2^3$ et $C^3$ à un niveau de pression intermédiaire entre celui des phases 1 et 2. Le contenu du réacteur (2) est en position de décomposition et le contenu du réacteur (1) reste en position de synthèse. Les écarts à l'équilibre de ces synthèse/décomposition restent importants, à cause du contact thermique qui existe entre les réacteurs (1) et (2). Il en résulte que la décomposition dans le réacteur (2) est plus rapide que la synthèse qui se termine dans le réacteur (1). Ainsi, une condensation est enclenchée immédiatement dans le dispositif (EC) qui évolue rapidement vers la position $C^3$. Cette condensation exothermique est possible car la chaleur est absorbée par la fusion superficielle des glaçons, ce qui induit leur décollement facilitant ainsi leur évacuation ultérieure du dispositif (EC). La mise en route des moyens de chauffage (6) dans (1) dès le début de cette phase (en même temps que l'ouverture de la vanne V2), entretient la condensation dans (EC) qui continue d'évoluer progressivement de la position $C^3$ à la position $C^{4'}$ permettant de nouveau d'obtenir une condensation effective du gaz. La condensation est à nouveau possible, lorsque le réacteur (1) se trouve en position $1^{4'}$ et lorsque la pression de condensation devient supérieure à la pression de vapeur saturante correspondante à la température $T_M$ de fusion du matériau à changement de phase. La température $T_1^{4'}$ est la température de régénération (Treg) et le dispositif (EC) est en position $C^{4'}$, ce qui entraîne le réacteur (2) dans la position $2^{4'}$ également à ce niveau de pression imposé par la condensation du gaz G.

L'ouverture de la vanne $V_2$, la vanne $V_1$ restant ouverte, et la mise en route des moyens de chauffage (6) dans le réacteur (1) déclenche la désorption rapide dans le réacteur (2) et le décollement et de l'évacuation des glaçons, la fin de la synthèse dans le réacteur (1) suivie de la désorption dans (1). La température de condensation imposée à la température $T_M$ par la fusion de l'eutectique permet d'une part de réaliser la condensation du gaz G à une température inférieure à la température ambiante ce qui permet de diminuer nettement l'amplitude thermique parcourue par le dispositif (EC) impliquant une meilleur efficacité du procédé et des durées de cycles plus courts. D'autres part, la pression de condensation $P_{C4}$, est plus faible que la pression $P_{C4}$ obtenu dans le cas sans matériau à changement de phase ce qui entraîne une diminution de la température de régénération de (1), et par conséquent de celle de (2), ce qui implique une diminution de l'énergie consommée pour la régénération de (1) et de (2) entraînant là encore une meilleure efficacité du procédé et une réduction des temps de cycles.

Phase 4 : Phase de refroidissement et de retour à la phase initiale

Le retour à la température $T_0$ s'effectue, pour l'ensemble de l'installation, en un temps plus court en présence d'un matériau à changement de phase, du fait que le réacteur (1) se trouve à une température plus basse.

L'installation selon l'invention dans sa configuration la plus générale, gérée par le procédé de l'invention, permet ainsi de produire du froid de forte puissance sur des durées très courtes, qui peuvent permettre la production quasi-instantanée de glaçons par exemple. En outre, lorsque l'installation contient un matériau à changement de phase dans l'élément endothermique, la température de régénération dans le réacteur fonctionnant à la température la plus élevée est diminuée, ce qui d'une part raccourcit la durée du processus et diminue la consommation d'énergie.

**Revendications**

1. Procédé pour la production de froid par un système thermochimique qui comprend trois phénomènes renversables mettant en oeuvre le gaz G, dans trois enceintes (EC), (1) et (2), les températures d'équilibre respectives $T_{E(EC)}$, $T_{E(1)}$ et $T_{E(2)}$ à une pression donnée étant telles que $T_{E(EC)} < T_{E(2)} < T_{E(1)}$, les enceintes (1) et (2) étant en contact thermique, **caractérisé en ce que**, à partir d'un état dans lequel les trois enceintes sont à température ambiante à la même pression :

    - dans une première phase, on isole l'enceinte (1), on met en communication les enceintes (EC) et (2) pour provoquer la synthèse exothermique dans (2), la chaleur formée étant absorbée par l'enceinte (1) ;
    - dans une deuxième phase, on isole l'enceinte (2) et on met en communication les enceintes (EC) et (1) pour provoquer la synthèse exothermique dans (1), la chaleur formée étant absorbée par l'enceinte (2) ;
    - dans une troisième phase, on met en communication les trois enceintes et on apporte de l'énergie calorifique à l'enceinte (1) pour provoquer les étapes de décomposition exothermique dans (1) et dans (2), en vue de régénérer l'installation, qu'on laisse ensuite revenir à la température ambiante.

2. Procédé selon la revendication 1, **caractérisé en ce que** :

- dans l'état initial, les enceintes (EC), (1) et (2) sont isolées les unes des autres et placées à la température ambiante, les enceintes (1) et (2) contiennent leur sorbant respectif S1 et S2 à l'état pauvre en gaz G, et l'enceinte (EC) contient G à l'état liquide ou le sorbant à l'état riche en gaz G ;
- au cours de la première phase, la mise en communication des enceintes (EC) et (2) provoque la production de froid dans l'enceinte (EC) à la température d'équilibre dans (EC) correspondant à la pression dans l'ensemble formé par (2) et (EC) ;
- au cours de la deuxième phase, la mise en communication des enceintes (EC) et (1) provoque la production de froid dans l'enceinte (EC) à la température d'équilibre dans (EC) correspondant à la pression dans l'ensemble formé par (1) et (EC) ;
- au cours de la troisième phase, la mise en relation des trois enceintes provoque la synthèse dans (EC) et la décomposition dans (2), puis l'apport de l'énergie calorifique à (1) provoque la décomposition dans (1).

3. Procédé selon la revendication 1, **caractérisé en ce que** le phénomène renversable dans les réacteurs (1) et (2) est choisi parmi les réactions chimiques renversables entre le gaz G et un solide, les adsorptions du gaz G sur un solide, et les absorptions du gaz G par un liquide.

4. Procédé selon la revendication 1, **caractérisé en ce que** le phénomène renversable dans le dispositif (EC) est un changement de phase liquide/gaz.

5. Procédé selon la revendication 1, **caractérisé en ce que** le phénomène renversable dans le dispositif (EC) est une sorption choisie parmi les réactions chimiques renversables entre le gaz G et un solide, les adsorptions du gaz G sur un solide, et les absorptions du gaz G par un liquide.

6. Installation pour la mise en oeuvre du procédé selon la revendication 1, comprenant un élément endothermique constitué par un dispositif (EC) et un élément exothermique constitué par un réacteur (1) et un réacteur (2), en contact thermique, de sorte que chacun d'eux constitue une masse thermique active pour l'autre, **caractérisée en ce que** :

   - les réacteurs (1) et (2) et le dispositif (EC) sont munis de moyens permettant de les mettre sélectivement en communication ;
   - le réacteur (1) et le réacteur (2) sont munis de moyens de chauffage (6) et de moyens (5) pour évacuer la chaleur ;
   - au début d'un cycle :

      * les réacteurs (1) et (2) contiennent respectivement un sorbant S1 et un sorbant S2 susceptibles de participer à une sorption renversable mettant en jeu un gaz G, la température d'équilibre de la sorption renversable dans (1) étant supérieure à la température d'équilibre de la sorption renversable dans (2) à une pression donnée ;
      * le dispositif (EC) contient un composé G susceptible de subir un changement de phase liquide/gaz ou un sorbant SEC+G riche en gaz G susceptible de participer à une sorption renversable dont la température d'équilibre est inférieure à la température d'équilibre de la sorption renversable dans le réacteur (2).

7. Installation selon la revendication 6, **caractérisée en ce que** le dispositif (EC) est en contact thermique direct avec un réservoir (3) contenant de l'eau.

8. Installation selon la revendication 6, **caractérisée en ce que** le dispositif (EC) contient en outre un matériau à changement de phase liquide/ solide, dont la température de changement de phase est inférieure à la température de production de froid.

9. Installation selon la revendication 6, **caractérisée en ce que** le dispositif (EC) est un évaporateur constitué par un cylindre (8) qui est fermé à ses deux extrémités, dont la section circulaire comporte à sa partie supérieure un arc de cercle concave correspondant à la section du bac à glaçon (7) et qui comprend en outre:

   - des ailettes creuses (9) placées à l'intérieur du cylindre, dans le sens longitudinal, l'espace entre les ailettes creuses étant occupé par un matériau à changement de phase solide/liquide ;
   - un tube (10) relié à une conduite permettant le transfert du gaz G entre l'évaporateur et le réacteur (2) pénètre dans l'enceinte cylindrique de l'évaporateur par un alésage réalisé dans l'une des extrémités du cylindre, et placé directement sous la paroi du bac à glaçons (7), le gaz de travail G sous forme d'un liquide en ébullition étant placé dans le fond de l'évaporateur.

10. Installation selon la revendication 6, **caractérisée en ce que** le réacteur (1) est placé à l'intérieur du réacteur (2).

11. Installation selon la revendication 10, **caractérisée en ce que** les réacteurs (1) et (2) sont concentriques, le réacteur (1) étant placé à l'intérieur du réacteur (2).

12. Installation selon la revendication 6, **caractérisée en ce que** chacun des réacteurs (1) et (2) est constitué par plusieurs plaques creuses contenant les sorbants respectifs, les plaques de l'un étant alternées avec les plaques de l'autre.

13. Installation selon la revendication 8, **caractérisée en ce que** l'écart entre la température de changement de phase du matériau à changement de phase et la température de production de froid est de 1°C à 10°C.

**Claims**

1. A method of refrigeration using a thermochemical system which comprises three reversible phenomena involving the gas G in three chambers (EC), (1) and (2), the respective equilibrium temperatures $T_{E(EC)}$, $T_{E(1)}$ and $T_{E(2)}$ at a given pressure being such that $T_{E(EC)} < T_{E(2)} < T_{E(1)}$, the chambers (1) and (2) being in thermal contact, **characterized in that**, starting from a state in which the three chambers are at ambient temperature and at the same pressure:

    - in a first step, the chamber (1) is isolated and the chambers (EC) and (2) are brought into communication in order to carry out the exothermic synthesis in (2), the heat produced being absorbed by the chamber (1);
    - in a second step, the chamber (2) is isolated and the chambers (EC) and (1) are brought into communication in order to carry out the exothermic synthesis in (1), the heat produced being absorbed by the chamber (2); and
    - in a third step, the three chambers are brought into communication and thermal energy is supplied to the chamber (1) in order to carry out the exothermic decomposition steps in (1) and in (2), for the purpose of regenerating the installation, which is then left to return to the ambient temperature.

2. The method as claimed in claim 1, **characterized in that**:

    - in the initial state, the chambers (EC), (1) and (2) are isolated from one another and placed at the ambient temperature, the chambers (1) and (2) contain their respective sorbent S1 and S2 in the state lean in gas G, and the chamber (EC) contains G in the liquid state or the sorbent in the state rich in gas G;
    - during the first step, bringing the chambers (EC) and (2) into communication causes refrigeration in the chamber (EC) at the equilibrium temperature in (EC) corresponding to the pressure in the assembly formed by (2) and (EC);
    - during the second step, bringing the chambers (EC) and (1) into communication causes refrigeration in the chamber (EC) at the equilibrium temperature in (EC) corresponding to the pressure in the assembly formed by (1) and (EC); and
    - during the third step, bringing the three chambers into communication causes synthesis in (EC) and decomposition in (2), and then applying thermal energy to (1) causes decomposition in (1).

3. The method as claimed in claim 1, **characterized in that** the reversible phenomenon in the reactors (1) and (2) is selected from reversible chemical reactions between the gas G and a solid, adsorptions of the gas G on a solid, and absorptions of the gas G by a liquid.

4. The method as claimed in claim 1, **characterized in that** the reversible phenomenon in the device (EC) is a liquid/gas phase change.

5. The method as claimed in claim 1, **characterized in that** the reversible phenomenon in the device (EC) is a sorption chosen from reversible chemical reactions between the gas G and a solid, adsorptions of the gas G on a solid, and absorptions of the gas G by a liquid.

6. An installation for implementing the method as claimed in claim 1, comprising an endothermic component consisting of a device (EC) and an exothermic component consisting of a reactor (1) and a reactor (2) in thermal contact so that each of them constitutes an active thermal mass for the other, **characterized in that** :

- the reactors (1) and (2) and the device (EC) are provided with means for bringing them selectively into communication;
- the reactor (1) and the reactor (2) are provided with heating means (6) and heat extraction means (5); and
- at the start of a cycle:

* the reactors (1) and (2) contain a sorbent S1 and a sorbent S2, respectively, capable of participating in a reversible sorption involving a gas G, the equilibrium temperature of the reversible sorption in (1) being higher than the equilibrium temperature of the reversible sorption in (2) at a given pressure; and
* the device (EC) contains a compound G capable of undergoing a liquid/gas phase change or an SEC+G sorbent rich in gas G capable of participating in a reversible sorption, the equilibrium temperature of which is below the equilibrium temperature of the reversible sorption in the reactor (2).

7. The installation as claimed in claim 6, **characterized in that** the device (EC) is in direct thermal contact with a reservoir (3) containing water.

8. The installation as claimed in claim 6, **characterized in that** the device (EC) furthermore contains a liquid/solid phase change material, the phase change temperature of which is below the refrigeration temperature.

9. The installation as claimed in claim 6, **characterized in that** the device (EC) is an evaporator which consists of a cylinder (8) which is closed at its two ends, the circular cross section of which cylinder includes, in its upper part, a concave circular arc corresponding to the cross section of the ice tray (7), which evaporator furthermore includes:

- hollow fins (9) are placed inside the cylinder, in longitudinal direction, the space between the hollow fins being occupied by a solid/liquid phase change material;
- a tube (10), connected to a pipe transferring the gas G between the evaporator and the reactor (2), runs into the cylindrical chamber of the evaporator via a bore made in one of the ends of the cylinder, which tube is placed directly beneath the wall of the ice tray (7), the working gas G in the form of a boiling liquid being placed in the bottom of the evaporator.

10. The installation as claimed in claim 6, **characterized in that** the reactor (1) is placed inside the reactor (2).

11. The installation as claimed in claim 10, **characterized in that** the reactors (1) and (2) are concentric, the reactor (1) being placed inside the reactor (2).

12. The installation as claimed in claim 6, **characterized in that** each of the reactors (1) and (2) is formed by several hollow plates containing the respective sorbents, the plates of one reactor alternating with the plates of the other.

13. The installation as claimed in claim 8, **characterized in that** the difference between the phase change temperature of the phase change material and the refrigeration temperature is from 1°C to 10°C.

**Patentansprüche**

1. Verfahren zur Erzeugung von Kälte durch ein thermochemisches System, das drei reversible Phänomene umfasst, wobei das Gas G in drei Räume (EC), (1) und (2) mit den jeweiligen Gleichgewichtstemperaturen $T_{E(EC)}$, $T_{E(1)}$ und $T_{E(2)}$ mit einem bestimmten Druck, so dass gilt $T_{E(EC)} < T_{E(2)} < T_{E(1)}$, eingesetzt wird, wobei die Räume (1) und (2) in thermischem Kontakt zueinander stehen, **dadurch gekennzeichnet, dass** ausgehend von einem Zustand, in dem die drei Räume Raumtemperatur bei gleichem Druck aufweisen,

- in einer ersten Phase das Raum (1) isoliert wird, Kontakt zwischen den Räume (EC) und (2) hergestellt wird, um in (2) eine exotherme Synthese hervorzurufen, wobei die erzeugte Wärme durch das Raum (1) absorbiert wird;
- in einer zweiten Phase das Raum (2) isoliert wird und Kontakt zwischen den Räume (EC) und (1) hergestellt wird, um in (1) eine exotherme Synthese hervorzurufen, wobei die erzeugte Wärme durch das Raum (2) absorbiert wird;
- in einer dritten Phase Kontakt zwischen allen drei Räume hergestellt wird und Wärmeenergie in Raum (1) zugeführt wird, um die Phasen einer exothermen Zersetzung in (1) und (2) hervorzurufen, um die Vorrichtung zu regenerieren, die schließlich auf Raumtemperatur abkühlen gelassen wird.

**2.** Verfahren nach Anspruch 1, **dadurch gekennzeichnet, dass**:

- die Räume (EC), (1) und (2) im Ausgangszustand voneinander isoliert sind und Raumtemperatur aufweisen, die Räume (1) und (2) jeweils ihr Sorptionsmittel S1 bzw. S2 in gasarmen Zustand enthalten und das Raum (EC) G in flüssigem Zustand oder das Sorptionsmittel gasreichem Zustand enthält;
- die Herstellung des Kontakts zwischen den Räume (EC) und (2) im Verlauf der ersten Phase die Erzeugung von Kälte in dem Raum (EC) bei der Gleichgewichtstemperatur in (EC) hervorruft, die dem Druck in der durch (2) und (EC) gebildeten Einheit entspricht;
- die Herstellung des Kontakts zwischen den Räume (EC) und (1) im Verlauf der zweiten Phase, die Erzeugung von Kälte in dem Raum (EC) bei der Gleichgewichtstemperatur in (EC) hervorruft, die dem Druck in der durch (1) und (EC) gebildeten Einheit entspricht;
- die Verbindung der drei Räume im Verlauf der dritten Phase die Synthese in (EC) und die Zersetzung in (2) hervorruft und schließlich die Zufuhr von Wärmeenergie zu (1) die Zersetzung in (1) hervorruft.

**3.** Verfahren nach Anspruch 1, **dadurch gekennzeichnet, dass** das reversible Phänomen in den Reaktoren (1) und (2) aus den reversiblen Reaktionen zwischen dem Gas G und einem Feststoff, der Absorption des Gases G durch einen Feststoff und der Absorption des Gases G durch eine Flüssigkeit ausgewählt ist.

**4.** Verfahren nach Anspruch 1, **dadurch gekennzeichnet, dass** es sich bei dem reversiblen Phänomen in der Vorrichtung (EC) um eine Zustandsänderung zwischen flüssigem und gasförmigem Aggregatzustand handelt.

**5.** Verfahren nach Anspruch 1, **dadurch gekennzeichnet dass** es sich bei dem reversiblen Phänomen in der Vorrichtung (EC) um eine Sorption handelt, die aus den reversiblen chemischen Reaktionen zwischen dem Gas G und einem Feststoff, der Adsorption des Gases G durch einen Feststoff und der Absorption des Gases G durch eine Flüssigkeit ausgewählt ist.

**6.** Vorrichtung zur Umsetzung des Verfahrens nach Anspruch 1, umfassend ein durch die Vorrichtung (EC) gebildetes, endothermes Element und ein durch einen Reaktor (1) und einen Reaktor (2) gebildetes exothermes Element, wobei der Reaktor (1) und der Reaktor (2) so in thermischem Kontakt stehen, dass keiner der beiden für den anderen eine aktive thermische Masse darstellt, **dadurch gekennzeichnet, dass**:

- die Reaktoren (1) und (2) und die Vorrichtung (EC) mit Vorrichtungen ausgestattet sind, die es ermöglichen, selektiv Kontakt zwischen diesen herzustellen;
- der Reaktor (1) und der Reaktor (2) mit Heizvorrichtungen (6) und Vorrichtungen (5) zum Evakuieren der Wärme ausgestattet sind;
- zu Beginn eines Zyklus:

* die Reaktoren (1) und (2) jeweils ein Sorptionsmittel S1 bzw. ein Sorptionsmittel S2 enthalten, die an einer reversiblen Sorption unter Einsatz des Gases G beteiligt sein können, wobei die Gleichgewichtstemperatur der reversiblen Sorption in (1) bei einem bestimmten Druck höher ist als die Gleichgewichtstemperatur der reversiblen Sorption in (2);
* die Vorrichtung (EC) eine Verbindung G, die eine Zustandsänderung von flüssig zu gasförmig und umgekehrt erfahren kann, oder ein Sorptionsmittel SEC+G enthält, das reich an Gas G ist und an einer reversiblen Sorption beteiligt sein kann, wobei deren Gleichgewichtstemperatur niedriger ist als die Gleichgewichtstemperatur der reversiblen Sorption in dem Reaktor (2).

**7.** Vorrichtung nach Anspruch 6, **dadurch gekennzeichnet, dass** die Vorrichtung (EC) unmittelbar mit einem Behälter (3), der Wasser enthält, in thermischem Kontakt steht.

**8.** Vorrichtung nach Anspruch 6, **dadurch gekennzeichnet, dass** die Vorrichtung (EC) außerdem ein Flüssig/Fest-Phasenübergangsmaterial enthält, wobei die Zustandsänderungstemperatur niedriger ist als die Kälteerzeugungstemperatur.

**9.** Vorrichtung nach Anspruch 6, **dadurch gekennzeichnet, dass** die Vorrichtung (EC) eine Eindampfungsvorrichtung ist, der aus einem Zylinder (8) besteht, der an seinen beiden Enden verschlossen ist, wobei der Kreisquerschnitt an seinem oberen Ende einen konkaven Kreisbogen umfasst, der dem Eisbereiterabschnitt (7) entspricht und der Zylinder weiters Folgendes umfasst:

- zwei hohle Rippen (9), die im Inneren des Zylinders in Längsrichtung angeordnet sind, wobei der Raum zwischen den hohlen Rippen mit einem Fest/Flüssig-Phasenübergangsmaterial gefüllt ist;
- ein Rohr (10), das mit einer Leitung verbunden ist, die die Leitung des Gases G zwischen der Eindampfungsvorrichtung und dem Reaktor (2) ermöglicht, tritt in den Zylinderquerschnitt der Eindampfungsvorrichtung durch eine Ausbohrung an einem Ende des Zylinders ein und ist unmittelbar unter der Wand des Eisbereiters (7) angeordnet, wobei das Betriebsgas G in Form einer kochenden Flüssigkeit am Boden der Eindampfungseinrichtung vorliegt.

10. Vorrichtung nach Anspruch 6, **dadurch gekennzeichnet, dass** der Reaktor (1) im Inneren des Reaktors (2) angeordnet ist.

11. Vorrichtung nach Anspruch 10, **dadurch gekennzeichnet, dass** die Reaktoren (1) und (2) konzentrisch angeordnet sind, wobei der Reaktor (1) im Inneren des Reaktors (2) angeordnet ist.

12. Vorrichtung nach Anspruch 6, **dadurch gekennzeichnet, dass** die Reaktoren (1) und (2) jeweils aus mehreren hohlen Platten bestehen, die das jeweilige Sorptionsmittel umfassen, wobei die Platten des einen Reaktors und die Platten des anderen Reaktors abwechselnd angeordnet sind.

13. Vorrichtung nach Anspruch 8, **dadurch gekennzeichnet, dass** der Unterschied zwischen der Phasenübergangstemperatur des Phaseübergangsmaterials und der Kälteerzeugungstemperatur 1°C bis 10°C beträgt.

Fig. 1

Fig. 2

**Fig. 3**

**Fig. 4**

Figure 5

*Figure 6*

Fig. 7

Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0810410 A
- EP 0835414 A
- WO 9740328 A